(19) Europäisches Patentamt
European Patent Office
Office européen des brevets

(11) Veröffentlichungsnummer: **0 058 340**
**B1**

(12) **EUROPÄISCHE PATENTSCHRIFT**

(45) Veröffentlichungstag der Patentschrift: **14.01.87**

(21) Anmeldenummer: **82100743.2**

(22) Anmeldetag: **03.02.82**

(51) Int. Cl.[4]: **C 08 L 83/04,** C 08 L 83/06, C 08 F 283/12, C 08 F 283/02, C 08 F 283/06, C 08 J 3/02, C 08 G 18/40

(54) **Stabile, organische Mehrkomponentendispersionen.**

(30) Priorität: **14.02.81 DE 3105499**

(43) Veröffentlichungstag der Anmeldung: **25.08.82 Patentblatt 82/34**

(45) Bekanntmachung des Hinweises auf die Patenterteilung: **14.01.87 Patentblatt 87/3**

(84) Benannte Vertragsstaaten: **BE DE FR GB IT NL**

(56) Entgegenhaltungen:
**EP-A-0 000 349**
**EP-A-0 029 947**
**EP-A-0 031 887**
**DE-A-2 947 966**
**DE-B-1 694 973**
**DE-B-2 142 597**

(73) Patentinhaber: **BAYER AG, Konzernverwaltung RP Patentabteilung, D-5090 Leverkusen 1 Bayerwerk (DE)**

(72) Erfinder: **Alberts, Heinrich, Dr., Morgengraben 16, D-5000 Koeln 80 (DE)**
Erfinder: **Friemann, Hans, Dr., Silesiusstrasse 82, D-5000 Koeln 80 (DE)**
Erfinder: **Moretto, Hans-Heinrich, Dr., Formesstrasse 13, D-5000 Koeln 80 (DE)**
Erfinder: **Sattlegger, Hans, Dr., Auf dem Heidchen 9, D-5068 Odenthal (DE)**

EP 0 058 340 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft stabile organische Mehrkomponentendispersionen aus

1. Diorganopolysiloxanen und/oder OH-endgestoppten Diorganopolysiloxanen,

2. aliphatischen oder gemisch aliphatisch-aromatischen Polykondensations- oder Polyadditionsprodukten, Polyethern oder Vinylpolymerisaten mit einer Glastemperatur $T_G$ bis zu 40° C und/oder ihre durch Pfropfung mit Vinylmonomeren modifizierten Derivate und gegebenenfalls ihre entsprechenden Gemische,

3. durch Pfropfung mit Vinylmonomeren modifizierte Diorganopolysiloxane und/oder OH-endgestoppte Diorganopolysiloxane oder Copfropfpolymerdispersionen, wie sie durch gleichzeitige Pfropfung von Vinylmonomeren auf Mischungen aus Diorganopolysiloxanen oder OH-endgestoppten Diorganopolysiloxanen und den unter 2. charakterisierten Polymeren erhalten werden.

Vorzugsweise betrifft die Erfindung bei Raumtemperatur durch Umgebungsfeuchtigkeit härtbare Dispersionen, ein Verfahren zu ihrer Herstellung und die Verwendung dieser Dispersionen.

Bei Raumtemperatur härtende Polymersysteme auf Basis von Organopolysiloxanen sind bekannt (vgl. z.B. W. Noll, Chemie und Technologie der Silikone, Verlag Chemie GmbH., 1968, S. 391 ff.).

Ferner ist die Herstelluhg von modifizierten Organopolysiloxanen nach verschiedenen Arbeitsweisen möglich und bekannt. Pfropfpolymere aus Organosiloxanen und Vinylpolymeren sind beispielsweise in den Patentschriften GB-A- 766 528, GB-A- 806 582, GB-A- 869 482 und DE-B- 1 694 973 beschrieben. In der DE-B- 1 694 973 wird die Anwendung von Organopolysiloxanen mit aufgepfropfter organische Kette und maximal 25 % Arylresten in bei Raumtemperatur härtenden 1- oder 2-Komponentenmassen beschrieben. Es wird ausgeführt, daß die eingesetzten Hydroxypolysiloxane in jedem Fall bis zu maximal 25 % Arylreste enthalten.

Ferner wird ausgeführt, daß die aufgepfropfte organische Kette durch polymerisierte Einheiten von Vinylmonomeren, bevorzugt Styrol und Acrylester, gebildet wird.

Ferner wird in den deutschen Patentanmeldungen DE-A- 29 47 964 (EP-A- 0 031 887), 29 47 966, 29 47 963 (EP-A-0 029 947) und 30 30 195 die Herstellung und Verwendung von Copfropfpolymerdispersionen für bei Raumtemperatur härtenden Silikonmassen beschrieben. Diese Copfropfpolymerdispersionen sind dadurch charakterisiert, daß sie OH-endgestoppte Diorganopolysiloxane, Zweitpolymere wie z.B. Polyester, Polyether oder Ethylen-Vinylester-Copolymere und in Gegenwart von Mischungen aus diesen Erst- und Zweitpolymeren polymerisierte Einheiten aus Vinylmonomeren, vorzugsweise Vinylacetat, Styrol oder (Meth)Acrylsäurederivate, enthalten.

Aufgrund des speziellen Polymerisationsverfahrens enthalten diese Copfropfpolymerisatdispersionen Polymermoleküle, in denen Erst- und Zweitpolymer über Vinylpolymerisatbrücken verknüft vorliegen.

Überraschend wurde gefunden, daß derartige Produkte nunmehr als "Verträglichkeitsvermittler" zwischen an sich nicht mischbaren bzw. unverträglichen 8ystemen (organopolysiloxanphase und z.B. Polykondensationsober Polyadditionsprodukten, Polyether oder Vinylpolymere) eingesetzt werden können.

Ferner sind Mischungen aus einem Nicht-Silikonpolymeren, beispielsweise einem Polyolefin, Olefincopolymeren wie Ethylen-Alkylacrylat- oder Ethylen-Vinylestercopolymeren, und einem Monoorganopolysiloxanharz bekannt (DE-A- 2 832 893). Diese in DE-A- 832 893 beschriebenen Polymerzusammensetzungen sind aus der Schmelze verarbeitbar, dienen der Beschichtung von z.B. Drähten und weisen einen geringen Sauerstoffindex auf, können aber nicht als bei Rautemperatur durch Umgebungsfeuchtigkeit härtende Dichtungsmassen verwendet werden.

In DE-B- 2 142 597 wird die Verwendung von Block- oder Pfropf-Copolymeren aus 5-95 Gew.-% eines Polydiorganosiloxans und 5-95 Gew.-% eines Vinylthermoplasten als Homogenisierungsmittel zur Herstellung eines homogenen Gemisches aus einem Polydiorganosiloxan und einem Vinylthermoplasten beschrieben, wobei der angeführte Vinylthermoplast in einer Menge von wenigstens 40 Gew.-%, bezogen auf das Gesamtgewicht der Mischung, vorliegt. Die Herstellung der Pfropfcopolymeren erfolgt stets mit Hilfe von Polyorganosiloxanen mit reaktiven Gruppen, die mit den freien Radikalen des Polymerisationssystems reagieren. Beispiele für solche reaktive Gruppen sind siliciumgebundene Vinyl- oder 3-Mercaptopropylgruppen. Ein Weg zur Erzeugung der Mischungen aus Vinylthermoplast und Polydiorganosiloxan besteht darin, das Polydiorganosiloxan und z.B. das Pfropfcopolymere in Vinylmonomeren zu lösen und dann das Vinylmonomere zu polymerisieren. Letzlich wird hier ein Verfahren zur Homogenisierung von Polyorganosiloxan in Vinylthermoplasten unter Zuhilfenahme spezieller Block- und Pfropfpolymerer beschrieben. Dabei weisen die Pfropfcopolymeren die gleiche stoffliche Zusammensetzung auf wie die abzumischenden Komponenten. Die erhaltenen Polymermischungen enthalten die Polyorganosiloxane als dispergierte Phase in einer Vinylthermoplast-Matrix, wodurch das Verarbeitungsverhalten des Vinylthermoplasten verbessert wird. Eine Verwendung solcher Mischungen in denen die Silikonphase die dispergierte Phase darstellt für elastomere Silikonmassen, die durch Aushärtung mit Luftfeuchtigkeit bei Raumtemperatur erhalten werden, wird nicht erwähnt und könnte mit derartigen Systemen auch nicht praktiziert werden.

Aliphatische oder gemischt aliphatisch aromatische polykondensations- oder Polyadditionsprodukte, Polyether oder Vinylpolymerisate mit Glastemperaturen $T_G \leq 40°C$ (vgl. M. Hoffmann, H. Krömer, R. Kuhn, Polymeranalytik I, Georg Thieme Verlag, Stuttgart, 1977, Seiten 73 ff.) sind nach dem heutigen Stand der Technik durch vielfältige Einsatzmöglichkeiten im Bereich der Lackherstellung, für Beschichtungssysteme, für Elastomere oder als Thermoplastmodifikatoren - um nur einige wichtigen Anwendungsmöglichkeiten aufzuzeigen - gekennzeichnet.

Ferner sind die hervorragenden Gebrauchseigenschaften der Silikonelastomeren, die auf verschiedene Weise zugänglich sind, ebenfalls bekannt und nicht im einzelnen hier aufzuzählen.

Aufgrund der Unverträglichkeit dieser verschiedenen Polymersysteme sind Mischungen aus diesen Substanzklassen nur in äußerst engbeschränkten Grenzen stabil und daher in der Praxis nicht einsetzbar.

Aufgabe der Erfindung war es, Systeme zu entwickeln, die zu stabilen und in beliebigen Mengenverhältnissen kombinierbaren Mischungen aus Organopolysiloxanen und Zweitpolymeren, wie sie oben beschrieben sind, führen.

Aufgabe der Erfindung war es ferner, Silikonmassen zu entwickeln, die neben verbesserten mechanischen Eigenschaften auch ausgezeichnete Lackierfähigkeit aufweisen sollen.

Die Aufgabe der Erfindung wurde durch die Herstellung organischer Mehrkomponentendispersionen gelöst, die dadurch gekennzeichnet sind, daß sie Mischungen aus

1. Diorganopolysiloxanen und/oder OH-endgestoppten Diorganopolysiloxanen

2. aliphatischen oder gemischt aliphatisch-aromatischen Polykondensations- oder Polyadditionsprodukten, Polyethern oder Vinylpolymerisaten mit einer Glastemperatur $T_G \leqslant 40°C$ und/oder ihre durch Pfropfung mit Vinylmonomeren modifizierte Derivate und gegebenenfalls ihre Gemische,

3. durch Pfropfung mit Vinylmonomeren modifizierte Diorganopolysiloxane und/oder OH-endgestoppte Diorganopolysiloxane oder Copfropfpolymerisatdispersionen, wie sie durch gleichzeitige Pfropfung von Vinylmonomeren auf Mischungen aus Diorganopolysiloxanen oder OH-endgestoppte Diorganopolysiloxanen und den unter 2. charakterisierten Polymeren erhalten werden, enthalten.

Somit sind Gegenstand der Erfindung Mischungen aus

I. 10 - 90 Gew.-% Diorganopolysiloxane und/oder OH-endgestoppte Diorganopolysiloxane mit einem Polymerisationsgrad n = 10 bis 5000,

II. 5 - 85 Gew.-% aliphatische oder gemischt aliphatischaromatische Polykondensations- oder Polyadditionsprodukte, polyether oder Vinylpolymere mit einer Glastemperatur $T_G$ bis zu 40°C und/oder ihre durch Pfropfung mit Vinylmonomeren modifizierten Derivate und gegebenenfalls ihre Gemische,

III. 5 - 55 Gew.-% eines pfropfpolymerisats erhältlich durch Pfropfpolymerisation von

1. 10 - 90 Gew.-% Vinylverbindungen in Gegenwart von

2. 10 - 90 Gew.-% Diorganopolysiloxanen und/oder endständig OH-funktionellen Organopolysiloxanen mit einem polymerisationsgrad von n = 10 bis 5000 und

3. 0 - 80 Gew.-% aliphatischen oder gemischt aliphatisch-aromatischen polykondensations- oder polyadditionsprodukten, polyethern, Vinylpolymeren mit einer Glastemperatur $T_G$ bis zu 40°C oder ihren Gemischen,

wobei die Summe der Komponenten 1 - 3 und ebenfalls die Summe der Komponenten 1 - III stets 100 Gew.-% beträgt.

Insbesondere sind Gegenstand der Erfindung Mischungen aus

I. 10-90 Gew.-% endständig OH-funktionellen Organopolysiloxanen

II. 0-40 Gew.-% Organopolysiloxanen mit Trimethylsilylendgruppen

III. 5-85 Gew.-% Pfropfpolymerisaten, bestehend aus

1. 25-95 Gew.-% aliphatischen oder gemischt aliphatisch-aromatischen Polykondensations- oder Polyadditionsprodukten, Polyethern, Vinylpolymeren mit einer Glastemperatur $T_G \leqslant 40°C$ oder ihren Gemischen und

2. 5-75 Gew.-% polymerisierten Einheiten aus Vinylmonomeren, wobei die Summe der Komponenten 1-2 stets 100 Gew.-% beträgt,

IV. 5-85 Gew.-% durch Pfropfung mit Vinylmonomeren. modif izierte Organopolysiloxane, bestehend aus

1. 10-90 Gew.-% Organopolysiloxanen mit Trimethylsilylendgruppen

2. 10-90 Gew.-% polymerisierten Einheiten aus Vinylverbindungen

3. 0-80 Gew.-% aliphatischen oder gemischt aliphatisch-aromatischen Polykondensations- oder Polyadditionsprodukten, Polyethern, Vinylpolymeren mit einer Glastemperatur $T_G \leqslant 40°C$ oder ihren Gemischen, wobei die Summe der Komponenten 1 - 3 und die Summe der Komponenten I - IV stets 100 Gew.-% beträgt.

Ferner sind Gegenstand der Erfindung Mischungen, die als Vinylpolymere mit einer Glastemperatur $T_G$ c- 40°C, insbesondere enthalten Vinylesterhomo- und Copolymerisate, vorzugsweise Homo- und Copolymere von Vinylacetat, (Meth)Acrylsäureesterhomo- und Copolymere, Ethylenpolymerisate, insbesondere Ethylencopolymere mit 5-99 Gew.-% eingebautem Vinylacetat oder Ethylen(Meth)Acrylsäureestercopolymere oder Ethylen-Propylen-Copolymerisate, ferner Vinylether-homo- und Copolymere, ferner Dien-homo- und Copolymere oder Blockcopolymere aus Dienen und Vinylaromaten.

Ferner enthalten die erfindungsgemäßen Dispersionen polymerisierte Einheiten aus Vinylestern, α,ß-ungesättigten Carbonsäuren, Derivaten α,ß-ungesättigter Mono- oder Dicarbonsäuren, Vinylaromaten wie Styrol, α -Methylstyrol oder 4°Chlorstyrol, α -Olefinen wie Ethylen, Propylen, Buten-1 oder Isobutylen, halogenierten Vinylmonomeren wie Vinylchlorid, Vinylidenchlorid, Vinylfluorid, Vinylidenfluorid, Tetrafluorethylen, Trifluorchlorethylen, Vinylether wie Ethylenvinylether, n-Butylvinylether, Allylverbindungen wie Allylalkohol, Allylacetat, Allylcarbonate, Diallylcarbonat, Diallylphthalat, Divinylverbindungen wie Divinylbenzol, Divinylether oder (Meth) Acrylsäureestern mehrwertiger Alkohole.oder Gemische dieser Monomeren.

Desweiteren sind Gegenstand der Erfindung bei Raumtemperatur vernetzbare Organopolysiloxanmassen,

die organische Mehrkomponentendispersionen und zusätzlich Vernetzer, Härtungskatalysatoren, Füllstoffe und gegebenenfalls weitere Zuschlagstoffe enthalten.

Ferner ist Gegenstand der Erfindung die Verwendung von bei Raumtemperatur vernetzbaren Organopolysiloxanmassen, die die erfindungsgemäßen Mehrkomponentendispersionen enthalten, als Ein- oder Zweikomponentensystema für Dichtungsmassen.

Die Herstellung der erfindungsgemäßen Mehrkomponentendispersionen erfolgt durch Abmischen der Komponenten unter Einwirkung von Scherkräften, wobei die Reihenfolge der Zusammengabe beliebig ist. Die Herstellung der Mischungen arfolgt bei Raumtemperatur oder erhöhten Temperaturen und vorzugsweise unter Normaldruck.

Die endständig OH-funktionellen Organopolysiloxane sind im wesentlichen linear und werden durch die folgende Formel dargestellt:

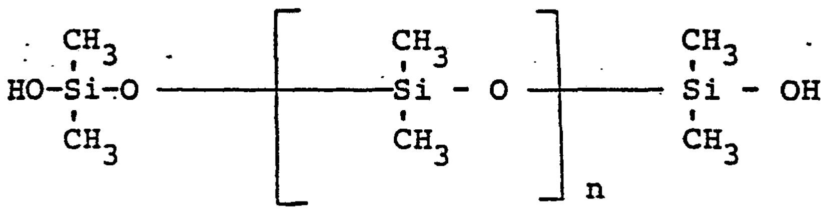

n = 10 bis 5000

Neben Methylgruppen können bis 30 Mol-% Ethyl-, Vinylund Phenylgruppen in den Organopolysiloxankomponenten enthalten sein, bevorzugt werden aber methylsubstituierte Organopolysiloxane eingesetzt.

Bei den Organopolysiloxanen mit Trimethylsilylendgruppen handelt es sich im wesentlichen um Dimethylpolysiloxane mit weitgehend linearer Struktur der folgenden allgemeinen Formel

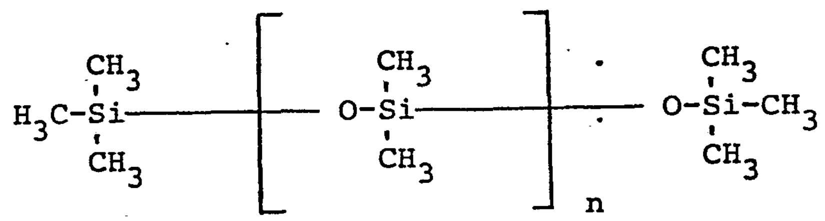

n = 10 bis 5000,

Neben Methylgruppen können bis 30 Mol-% Ethyl-, Vinyl-, phenyl- oder H-Gruppen in den Organopolysiloxankomponenten enthalten sein, bevorzugt werden aber rein methylsubstituierte Organopolysiloxane verwendet.

Bei den aliphatischen oder gemischt aliphatisch-aromatischen Polykondensations- oder Polyadditionsprodukten handelt es sich im wesentlichen um Polyester, Polycarbonate, Polyurethane oder Co-Kondensations- oder Additionspolymere mit statistischem oder alternierenden Aufbau oder um Blockcopolymere. Die Herstellung dieser Polymeren erfolgt nach an sich bekannten Verfahren, beispielsweise nach Houben-Weyl, Methoden der organischen Chemie, Band XIV/2, Georg Thieme Verlag Stuttgart, 1963; C.E. Schildknecht, J. Skeist, Polymerization Processes, Vol. XXIX, John Wiley a. sons, New York, 1977; B.R. II. Gallot. Adv. in polymer Sci, Vol. 29, Springer Verlag, Berlin, Heidelberg 1978, 8. 85 ff.

Die für die Herstellung der Mischungen oder die Pfropfund Copfropfpolymerisation eingesetzten aliphatischen oder gemischt aliphatisch-aromatischen Polyester werden in an und für sich bekannter Weise durch Veresterungs- oder Umesterungsreaktion von Gemischen aus aliphatischen oder aromatischen Dicarbonsäuren, ihren Anhydriden oder Estern und aliphatischen Dialkoholen hergestellt, vgl. Ullmanns Enzyklopädie der technischen Chemie, 14. Band, Urban und Schwarzenberg, München 1983, 8. 80 ff.

Als Dicarbonsäuren werden vorzugsweise eingesetzt Adipinsäure, Sebacinsäure, Terephthalsäure, Phthalsäure, Isophthalsäure, Maleinsäure, Fumarsäure, Itaconsäure; als mehrwertige Alkohole werden vorzugsweise eingesetzt Ethylenglykol, Propandiol-1,2 und 1,3, Butandiol-1,3 und -1,4, Hexandiol-1,6, 2,2-Dimethylpropandiol-1,3 und Polyethylen- und Polypropylenglykole oder mehrwertige aliphatische Alkohole, die 2-7 Etheratome im Molekül enthalten (vgl- DE-AS 10 54 620).

Für verzweigte Polyester werden höherfunktionelle Carbonsäuren oder Alkohole eingesetzt, erwähnt seien Glycerin, 1,1,1-Trimethylolpropan, Hexantriol und Pentaerythrit, (vgl. z.B. DE-PS 1 105 160 und DE-AS 1 029 147). Die Molekulargewichte der Polyester liegen im allgemeinen zwischen 800 und 10 000, können aber auch wesentlich höher sein, die OH-Zahlen zwischen 0,1 und 150. Die Restwassergehalte der Polyester liegen im allgemeinen unter 0,1 %. Falls gewünscht, können auch spezielle hochmolekulare Polyester mit z.B. enger Molekulargewichtsverteilung eingesetzt werden, die durch Polymerisation von Lactonen, wie z.B. β-propiolacton, γ-Butyrolacton oder ε-Caprolacton erhalten werden, oder deren Synthese durch

Copolymerisation von Epoxiden mit cyclischen Anhydriden erfolgte, vgl. K. Hamann, Makrom. Chem. 51 (1962) 53 und R.F. Fischer, J. Poly. Sci. 44 (1960) 155.

Geeignete Polyester im Sinne der Erfindung sind auch Polycarbonate oder Mischesterpolycarbonate, die durch Umesterungsreaktion von Polyolen oder Polyestern mit z.B. Diphenylcarbonat erhalten werden können, beispielhaft seien aufgeführt Butylenglykolpolycarbonat, Hexandiol-1,6-polycarbonat. Entsprechende reinaliphatische PPolycarbonate sind auch durch ringöffnende Polymerisation von z.B. Glykolcarbonat oder durch Copolymerisation von Epoxiden mit Kohlendioxid erhältlich.

Die für die Herstellung der Mischung, Pfropf- und Copfropfpolymerisation eingesetzten aliphatischen Polyether weisen in der Regel zwei bis acht, vorzugsweise zwei bis drei Hydroxylgruppen auf und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von $BF_3$ oder durch Anlagerung dieser Epoxide, gegebenenfalls im Gemisch oder nacheinander, an Startkomponenten mit reaktionsfähigen Wasserstoffatomen wie Alkohole oder Amine, Wasser, Ethylenglykol, propylenglykol-(1,3) oder -(1,2), Trimethylolpropan, Trimethylolpropan, 4,4'-Dihydroxydiphenylpropan, Anilin, Ammoniak, Ethanolamin, Ethylendiamin hergestellt. Auch Sucrosepolyether, wie sie z.B. in den deutschen Auslegeschriften 1 176 358 und 1 064 938 beschrieben werden, kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch durch Vinylpolymerisate modifizierte Polyether, wie sie z.B. durch polymerisation von Styrol, Acrylnitril in Gegenwart von Polyethern entstehen (amerikanische Patentschriften 3 383 351, 3 304 273, 3 523 093, 3 110 695, deutsche patentschrift 1 152 536), sind ebenfalls geeignet, ebenso OH-Gruppen aufweisende Polybutadiene.

Unter den Polythioethern seien insbesondere die Kondensationsprodukte von Thiodiglykol mit sich selbst und/ oder mit anderen Glykolen, Dicarbonsäuren, Formaldehyd, Aminocarbonsäuren oder Aminoalkoholen angeführt. Je nach den Co-Komponenten handelt es sich bei den Produkten um Polythiomischether, Polythioetherester, Polythioetheresteramide.

Die OH-Funktionen der verwendeten Polykondensations- oder Polyadditionsprodukte können vor, während oder nach der Herstellung der Mischungen acyliert oder durch Umsetzung mit Mono-, Di- oder Polyisocyanaten urethanisiert werden. Die Acylierung kann mit Carbonsäurehalogeniden oder Carbonsäureanhydriden erfolgen. Selbstverständlich ist auch eine Umesterung mit Carbonsäureestern möglich. Bevorzugt wird die Acylierung mit Acetanhydrid durchgeführt. Die Urethanisierung kann prinzipiell mit den in der Technik bekannten Isocyanaten durchgeführt werden. Bevorzugte Isocyanate sind Phenylisocyanat, Alkylisocyanate wie Methyl-, Ethyl-, Propyl-, Isopropyl oder Butylisocyanat, Methoxymethylisocyanat, 1,4-Toluylendiisocyanat, 1,2-Toluylendiisocyanat, Hexamethylendiisocyanat, Isophorondiisocyanat.

Vinylpolymere mit einer Glastemperatur $T_G \leqslant 40°C$ werden nach den bekannten Verfahren der radikalischen, anionischen, kationischen oder metallorganisch initiierten Polymerisation erhalten. Bei den Polymeren handelt es sich im wesentlichen um Homo-, Co- und Blockcopolymere. Die Copolymeren haben statistischen oder alternierenden Aufbau. Die Blockcopolymeren können aus verschiedenen Vinylmonomeren aufgebaut sein, können aber auch Blöcke aus Polyadditions- oder Polykondensationspolymeren, beispielsweise polyether-, polysiloxan-, Polycarbonat-, polyesterblöcke enthalten, vgl. B.R.M. Gallot, Adv. in polymer Sci, Vol. 29, Springer-Verlag, Berlin, Heidelberg, 1978, S. 85 ff.

Insbesondere sind die Vinylpolymeren mit $T_G \leqslant 40°$ Homound Copolymerisate von Vinylestern, vorzugsweise Vinylacetat, Homo- und Copolymerisate von (Meth)Acrylsäureestern, vorzugsweise Poly-n-Butylacrylat, Styrol-n-Butylacrylatpolymere, Vinylacetat-n-Butylacrylatcopolymere, gegebenenfalls Acrylnitril-Copolymere mit den aufgeführten Vinylmonomeren, Ethylen-copolymerisate, vorzugsweise Ethylen-Vinylacetatcopolymere mit 5 bis 99 Gew.-% eingebautem Vinylacetat, Ethylen(Meth)Acrylsäureestercopolymere, Ethylen-propylen-Co- oder Terpolymere, ferner Vinyl-$C_2$-$C_{18}$-alkylether- homo- und copolymere, beispielsweise Poly-n-butylvinylether.

Die Pfropfmodifizierung der Polykondensations- und Polyadditionspolymeren, der Polyether, der Vinylpolymeren mit $T_G \leqslant 40°C$ und der Polysiloxane erfolgt in an sich bekannter Weise durch radikalische Polymerisation von Vinylmonomeren in Gegenwart dieser genannten Polymeren in Lösung, Emulsion, Suspension oder Masse. Die Herstellung der pfropfmodifizierten Polysiloxane kann beispielsweise nach den Verfahren erfolgen, wie sie in US-A- 2 959 569, US-A- 4 172 101, US-A- 4 166 078, US-A- 4 170 610, DE-B- 2 000 348, DE-B- 1 694 973 DE-B- 1 795 289, GB-A- 766 528 beschrieben sind. Die Herstellung der Copfropfpolymeren erfolgt, wie im folgenden beispielhaft beschrieben wird, in der Weise, daß Mischungen aus einem Organopolysiloxan, einem Vinylpolymerisat mit einer Glastemperatur $T_G \leqslant 40°C$, einem aliphatischen oder gemischt aliphatische-aromatischen polyester, polycarbonat oder polyesterurethan gegebenenfalls einem Polyether oder Polyetherurethan und einem oder mehrerer Vinylmonomerer und gegebenenfalls Mono-, Di- oder polyisocyanate auf eine Reaktionstemperatur gebracht werden, bei der die radikalische Polymerisation und gleichzeitig die gegebenenfalls stattfindende Urethanisierung ausreichend schnell ablaufen. Falls erwünscht, können Mischungen aus endständig OH-funktionellen und nicht funktionellen Organopolysiloxanen in die Reaktionsmischung eingetragen werden. Die Polymerisation kann nach kontinuierlichem oder diskontinuierlichem Verfahren durchgeführt werden. Im Prinzip ist die Reihenfolge der Zugabe der zur Reaktion zu bringenden Komponenten beliebig, die besten Resultate werden aber erzielt, wenn Mischungen aus Siloxan- und Zweitpolymerkomponenten und Vinylmonomeren gleichzeitig bei der Durchführung der Polymerisationsreaktion eingesetzt werden.

Als für die Pfropfreaktion besonders geeignete Vinylmonomere seien beispielhaft aufgeführt: Olefine wie Ethylen, Propylen, Isobutylen, Vinylester aliphatischer oder aromatischer Carbonsäuren, vorzugsweise Vinylacetat, Vinylpropionat, α, β-ungesättigte Mono- oder Dicarbonsäuren und ihre Derivate, erwähnt seien (Meth)Acrylsäure, Methyl(meth)acrylat, Ethyl(meth)acrylat, Propyl- bzw. Isopropyl(meth)acrylat, n-Butyl-, iso- oder tert.-Butyl(meth)acrylat, 2-Ethyl-hexyl(meth)acrylat, (Meth)Acrylamid, N-Alkyl-substituierte (Meth)Acrylamidderivate, (Meth)Acrylnitril, Maleinsäureanhydrid, Maleinsäureamide, N-Alkyl-maleinimid, Maleinsäurehalb- oder -diester, Vinylaromaten wie Styrol, α-Methylstyrol, 4-Chlorstyrol, Vinylchlorid, Vinylidenchlorid, Vinylidenfluorid, Tetrafluorethylen, Vinylether wie Ethylvinylether oder n-Butylvinylether; alls der Reihe der Ally lverbindungen seien angeführt Allylalkohol, Allylacetat, Isobutendiacetat, 2-Methylen-Propandiol-1,3, Allylethylcarbonat, Allylphenylcarbonat. Falls die Vernetzung oder Erhöhung der Molekulargewichte der Vinylharzphase gewünscht wird, können mehrfach ungesättigte Vinylverbindungen oder Allylverbindungen eingesetzt werden. Erwähnt seien Divinylbenzol, (Meth)Acrylsäureester mehrwertiger Alkohole z.B. Ethylenglykoldimethacrylat, Diethylenglykoldiacrylat und Divinylether.

Die erfindungsgemäß erhaltenen Organopolysiloxan-Mischdispersionen sind besonders für die Verwendung in bei Raumtemperatur härtenden 1- und 2-Komponenten-massen geeignet. Solche Massen, die nach dem Kondensationsprinzip aushärten, bestehen bekanntlich aus hydroxylendblockierten Polydiorganosiloxanen, Vernetzern, Füllstoffen und Katalysatoren.

Die hydroxylendblockierten Polydiorganosiloxane können ganz oder teilweise durch die erfindungsgemäßen Mischungen ersetzt werden. Als Vernetzer werden Silane mit mindestens 3 hydrolytisch leicht abspaltbaren Gruppen im Molekül wie Carbonsäuren, Carbonsäureamide, Oxime, Aminoxide und Amine eingesetzt. Verstärkende Füllstoffe sind z.B. Pyrogen erzeugte Siliciumdioxide, als nicht verstärkender Füllstoff kommt z.B. Kreide in Frage. Als Katalysatoren verwendet man u.a. organische Zinnverbindungén wie Dibutylzinndilaurat.

Silikonmassen, in denen die erfindungsgemäßen Mehrkomponenten-Polysiloxan-Dispersionen verwendet werden, zeigen im Vergleich mit den bishér bekannten Silikonmassen eine wesentlich verbesserte Uberstreichbarkeit mit handelsüblichen Lacken, die z.B. auf Alkydharz- oder Polyurethanbasis beruhen. Die bei Raumtemperatur ausgehärteten Silikonmassen, in denen die erfindungsgemäßen Copfropfpolymerisate als aufbauende Bestandteile enthalten sind, können wie Holz lackiert werden. Ferner wird bei diesen neuartigen Systemen ausgezeichnete Haftung, auch bei Nässe, auf Holz, Metallen und Beton festgestellt.

Die folgenden Beispiele erläutern die Herstellung der erfindungsgemäßen Polysiloxan-Mischdispersionen.

**Herstellung der Ausgangssubstanzen**

Die Herstellung der Polydimethylsiloxane wie auch der OH-funktionellen polysiloxane geschieht in an sich bekannter Weise (vgl. z.B. W. Noll, Chemie und Technologie der Silikone, Verlag Chemie GmbH., Weinheim/Bergstr., 2. Auflage, 1968, Kap. 5, S. 162 ff.).

| Polysiloxan-Nr. | Beschreibung | Viskosität mPas bei 20°C |
|---|---|---|
| 1 | Polydimethylsiloxan | 1000 |
| 2 | OH-Polysiloxan | 5000 |
| 3 | OH-Polysiloxan | 10000 |
| 4 | OH-Polysiloxan | 50000 |

Die Herstellung der Polyester (vgl. Tabelle 1) erfolgt durch Schmelzkondensation unter Abdestillation des gebildeten Reaktions-Wassers bis zum Erreichen der gewünschten OH- bzw. Säure-Zahlen, (vgl. Houben-Weyl, Methoden der Organischen Chemie, Bd. XIV/2, Georg Thieme-Verlag, Stuttgart, 1963, S. 1 ff). In der Tabelle 2 sind die wichtigsten Kenndaten der verwendeten polyether zusammengefaßt:

**Tabelle 1**

| Bezeichnung des Polyesters | Zusammensetzung | OH-Zahl | Säure-zahl |
|---|---|---|---|
| A | Adipinsäure-Diethylenglykol | 40 | 1 |
| B | Adipinsäure, Diethylenglykol, Essigsäure | 1 | 1 |
| C | Adipinsäure, Ethylenglykol, Butandiol-1,4 | 55 | 1 |

**Tabelle 2**

| Polyether | Zusammensetzung | Kenndaten |
|---|---|---|
| A | Polyethylenglykol MG ca. 1500 | Fp: 58–60°C<br>OH-Zahl: ca.5 |
| B | Polyethylenglykol MG ca. 6000 | |
| C | Polyethylenglykol MG ca. 20000 | |
| D | Trifunktioneller Mischpolyether aus Propylen- und Ethylenoxid | Viskosität 520 mPas |
| E | mit Acetanhydrid acetylierter Polyether D | OH-Zahl < 1 |

**Herstellung der Pfropolymerisate**

**Pfropfolymer: 1-4**

In einem 6 l Rührgefäß werden unter Stickstoff die in der Tabelle 3 unter "Vorlage" angegebenen Komponentenunter Rühren auf 110°C erwärmt. Dann wird der Ansatz 1 Stunde bei 110°C nachgerührt. Die flüchtigen Anteile werden durch Vakuumdestillation entfernt. Der Ansatz wird abgekühlt und die Viskosität des Endproduktes bei 25°C gemessen.

**Propfpolymer 5-9**

In Anlehnung an das unter 1-4 beschriebene Verfahren werden die Copfropdispersionen 5-9 mit der in Tabelle 4 angegebenen Zusammensetzung hergestellt:

**Tabelle 3**

| Pfropfpolymer-Nr. | Vorlage Polysiloxan 1 | Polyether A | B | C | Lösung Vinylacetat | Styrol | n-Butylacrylat | tert.-Butylacrylat | tert.-Butyl perpivalat |
|---|---|---|---|---|---|---|---|---|---|
| 1 | 1980 | 990 | – | – | 1540 | – | – | – | 11,5 |
| 2 | 1980 | – | 990 | – | 1540 | – | – | – | 11,5 |
| 3 | 1800 | – | – | 900 | – | – | 1200 | 240 | 9,75 |
| 4 | 2400 | – | – | 1200 | – | 400 | 800 | 200 | 10,5 |

| Pfropfpolymer-Nr. | Viskosität bei 25°C in mPas |
|---|---|
| 1 | 14 500 |
| 2 | 19 700 |
| 3 | 15 200 |
| 4 | 8 200 |

**Tabelle 4**

| Pfropf-polymer Nr. | Polysiloxan 2 | 3 | Polyether E | Polyester A | C | Vinyl-acetat | Monomer-Umsatz Gew.-% | Viskosität bei 25°C in mPas |
|---|---|---|---|---|---|---|---|---|
| 5 | 1900 | — | 1000 | — | — | 1100 | 96,8 | 60 600 |
| 6[1] | 13000 | — | — | 6500 | — | 6500 | 90,3 | 30 000 |
| 7[1] | 12381 | — | — | 6941 | — | 8442 | 96,0 | 80 800 |
| 8[1] | — | 13000 | — | 6500 | — | 6500 | 98,5 | 60 000 |
| 9[2] | — | 28780 | — | — | 14390 | 14390 | 93,0 | 56 600 |

[1] Ansätze im 40 l Rührkessel
[2] Ansatz im 100 l Rührkessel

**Propfpolymer 10**

In einem 6 l-Rührkessel werden 2,9 kg Polysiloxan 3 vorgelegt und unter Stickstoffüberleitung auf 110°C erwärmt. Dann wird eine Lösung von 100 g Polysiloxan 3, 2,25 g tert.-Butylperpivalat und 1 kg Vinylacetat in 2 Stunden hinzugegeben und anschließend 1 Stunde bei 110°C nachgerührt. Der Monomerumsatz beträgt 98,1 %. Nach Entfernung der flüchtigen Anteile weist die Dispersion eine Viskosität von 22 500 mPas auf.

**Pfropfpolymer 11 bis 13**

In einem 6 l-Rührkessel werden unter Stickstoff die in der Tabelle 5 angegebenen Polyester vorgelegt, unter Stickstoff auf 110°C aufgeheizt und das Vinylacetat/Initiatorgemisch in 2 Stunden unter Rühren hinzugegeben. Man rührt 1 Stunde bei 110°C nach und zieht anschließend nicht umgesetztes Vinylacetat im Vakuum ab.

**Tabelle 5**

| Pfropf-polymer Nr. | Polyester A | B | Vinyl-acetat | tert. Butyl-perpivalat | Gew.-% Monomer-umsatz | Viskosität bei 25°C in mPas |
|---|---|---|---|---|---|---|
| 11 | — | 3000 | 1000 | 2,25 | 94,4 | 51 500 |
| 12 | 3000 | — | 1000 | 2,25 | 96,1 | 23 000 |
| 13 | 2000 | — | 2000 | 9,0 | 98,7 | 92 000 |

**Profropfpolymer 14 bis 16**

In einem 6 1 Rührkessel werden die in Tabelle 6 aufgeführten Komponenten vorgelegt, unter Stickstoff auf 110°C erwärmt und bei 110°C innerhalb von 2 Stunden das Vinylacetat-Initiatorgemisch hinzugegeben. Der Ansatz wird 2 Stunden bei 110°C nachgerührt. Anschließend werden die flüchtigen Anteile im Vakuum bei 110°C abdestilliert. Nach dem Abkühlen wird die Viskosität bei 25°C gemessen.

**Tabelle 6**

| Pfropf-polymer | Polyester A | Polyether D | Hexame-thylen-diisocyanat | Vinyl-acetat | tert. Butyl-perpivalat | Viskosität bei 25°C in mPas |
|---|---|---|---|---|---|---|
| 14 | 2400 | 600 | 120 | 1000 | 2,25 | 30 000 |
| 15 | 3000 | — | 120 | 1000 | 2,25 | 75 000 |
| 16 | 2400 | 600 | 120 | 1350 | 3,0 | 40 000 |

Der Monomerumsatz beträgt in allen Fällen etwa 90 %.

## Herstellung der Abmischungen

Wenn nicht anders angegeben, werden die Abmischungen durch Rühren bei Raumtemperatur (Rührzeit 1 Stunde) hergestellt. Die Zusammensetzung der erfindungsgemäßen Abmischungen wird in den folgenden Tabellen angegeben. Die Angaben erfolgen in Gew.-%.

**Tabelle 7**

**Beispiel 1-6**

| Beispiel Nr. | Polysiloxan 4 | Pfropfpolymer-Nr. 1 | 2 | 11 | 14 | 15 | 16 | Viskosität bei 25°C in mPas |
|---|---|---|---|---|---|---|---|---|
| 1 | 30 | 50 | — | 20 | | | | 66 000 |
| 2 | 30 | — | 50 | 20 | | | | 125 000 |
| 3 | 33,3 | — | 47,8 | 18,9 | | | | 85 000 |
| 4 | 40 | — | 42,2 | — | 17,8 | | | 82 000 |
| 5 | 40 | — | 42,2 | — | — | 17,8 | | 79 000 |
| 6 | 40 | — | 42,2 | — | — | — | 17,8 | 81 000 |

## Beispiel 7

In einem 6 l Rührkessel werden die folgenden Komponenten 2 Stunden bei 110°C verrührt und gleichzeitig während der Abmischung durch Umsetzung des Polyesters A mit Hexamethylendiisocyanat ein polyesterurethan hergestellt:

1800 g polysiloxan 4, 1800 g pfropfpolymer 2, 800 g polyester A, 80 g Hexamethylendiisocyanat. Nach dem Abkühlen auf Raumtemperatur beträgt die Viskosität 86 000 mpas.

## Beispiele 8-16

Die in der Tabelle 8 aufgeführten Abmischungen werden durch Verrühren der Komponenten bei Raumtemperatur hergestellt.

**Tabelle 8**

| Beispiel-Nr. | Polysiloxan 2 | 3 | 4 | Pfropfpolymer 2 | 3 | 5 | 6 | 7 | 8 | 9 | 0 | 12 | 13 | Polyester A | C | Polyether D | Viskosität bei 25°C in mPas |
|---|---|---|---|---|---|---|---|---|---|---|---|---|---|---|---|---|---|
| 8 | 25 | | | | | 50 | | | | | | | | 25 | | | 30300 |
| 9 | 25 | | | | | 50 | | | | | | | | | | 25 | 25500 |
| 10 | 25 | | | | | | 50 | | | | | | | | 25 | | 40400 |
| 11 | 25 | | | | | | | 50 | | | | | | 25 | | | 42400 |
| 12 | 30 | | | | 50 | | | | | | | | | 20 | | | 12400 |
| 13 | 30 | | | | 50 | | | | | | | | 20 | | | | 12900 |
| 14 | | 25 | | | | | | | 50 | | | | | 25 | | | 58600 |
| 15 | | 25 | | | | | | | | 50 | | | | | | 25 | 34000 |
| 16 | | | 30 | 50 | | | | | | | | 20 | | | | | 67000 |

**Bestimmung der Qualität der Dispersionen**

Die nach dem hier beschriebenen Verfahren hergestellten Massen wurden mit Hilfe von Vernetzern und die Vernetzung fördernden Katalysatoren nach folgender Rezeptur abgemischt und unter dem Einfluß von Luftfeuchtigkeit ausgehärtet:

200 g Copfropfpolymerisat

10,4 g eines Titankomplexes der folgenden ungefähren Zusammensetzung:

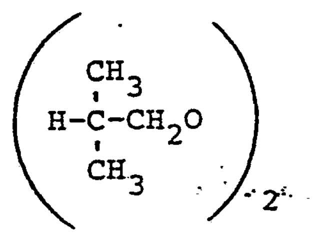

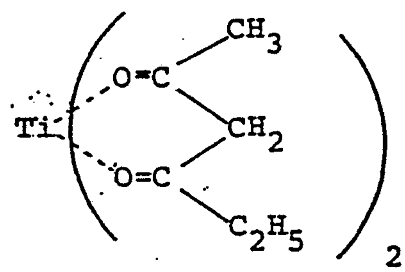

11,4 g Bis-(N-methylbenzamido)-ethoxymethylsilan

2,2 g Dibutylzinndiacetat

Die vernetzten Produkte sind elastisch und klebfrei. Sie wurden mit einem handelsüblichen Alkydal-Lack angestrichen, dessen Haftung auf dem Silicon nach 7 Tagen mit Hilfe des Gitterschnitt-Tests ermittelt wurde, indem man auf der lackierten Oberfläche ein Quadrat von 2,54 cm mit einer Rasierklinge in 100 gleich große quadratische Stücke zerschneidet, so daß man eine bemalte Oberfläche mit gitterförmigen Aussehen erhält. Auf dieses Gitter wird dann ein Klebstreifen (Tesafilm Nr. 101 der Fa. Beiersdorf AG. Hamburg) fest aufgepreßt. Der Klebstreifen wird hierauf entfernt, indem man ihn unter einen Winkel von etwa 30° langsam abzieht. Der prozentuale Wert für die Retention des Lackes ergibt sich aus der Anzahl der bemalten quadratischen Stücke, die nach dem Entfernen des Klebstreifens auf der gehärteten Zubereitung verblieben. Die physikalischen Eigenschaften sowie die Ergebnisse des Gitterschnitt-Tests gehen aus den folgenden Tabellen 9 und 10 hervor. Für die Vergleichsbeispiele A und B wurden hydroxylendblockierte polydimethylsiloxane mit einer Viskosität von 5 Pas im Beispiel A und 50 pas im Beispiel B eingesetzt.

**Tabelle 9**

| Vergleichsbeispiel Nr. | Lackverlauf | Lackhaftung % | E-modul (100 % Dehnung) N/mm² | Reißfestigkeit N/mm² | Bruchdehnung % |
|---|---|---|---|---|---|
| A | schlecht | 0 | 0,141 | 0,299 | 295 |
| B | schlecht | 18 | 0,097 | 0,313 | 544 |

**Tabelle 10**

| Beispiel Nr. | Lackverlauf | Lackhaftung % | E-Modul (100 % Dehnung) N/mm² | Reißfestigkeit N/mm² | Bruchdehnung % |
|---|---|---|---|---|---|
| 1 | gut | 100 | 0,070 | 0,217 | 571 |
| 2 | gut | 100 | 0,055 | 0,184 | 528 |
| 3 | gut | 77 | 0,053 | 0,220 | 718 |
| 4 | gut | 58 | 0,102 | 0,360 | 1017 |
| 5 | gut | 84 | 0,091 | 0,390 | 739 |
| 6 | gut | 99 | 0,038 | 0,246 | 977 |
| 7 | gut | 99 | 0,070 | 0,224 | 477 |
| 8 | gut | 88 | 0,092 | 0,309 | 645 |
| 9 | gut | 84 | 0,05 | 0,172 | 632 |
| 10 | gut | 83 | 0,139 | 0,303 | 407 |
| 11 | gut | 88 | 0,169 | 0,355 | 369 |
| 12 | gut | 71 | 0,069 | 0,170 | 542 |
| 13 | gut | 66 | 0,036 | 0,131 | 591 |
| 14 | gut | 92 | 0,186 | 0,350 | 355 |
| 15 | gut | 97 | 0,056 | 0,128 | 431 |
| 16 | gut | 99 | 0,123 | 0,345 | 851 |

**Patentansprüche**

1. Bei Raumtemperatur fließfähige Dispersionen, enthaltend

I. 10 - 90 Gew.-% Diorganopolysiloxane und/oder OHendgestoppte Diorganopolysiloxane mit einem Polymerisationsgrad n = 10 bis 5000,

II. 5 - 55 Gew.-% aliphatische oder gemischt aliphatischaromatische Polykondensations- oder Polyadditionsprodukte, Polyether oder Vinylpolymere mit einer Glastemperatur $T_G$ bis zu 40°C und/oder ihre durch Pfropfung mit Vinylmonomeren modifizierten Derivate und gegebenenfalls ihre Gemische,

III. 1 - 85 Gew.-% eines Pfropfpolymerisats erhältlich durch Pfropfpolymerisation von

1. 10 - 90 Gew.-% Vinylverbindungen in Gegenwart von

2. 10- 90 Gew.-% Diorganopolysiloxanen und/oder endständig OH-funktionellen Organopolysiloxanen mit einem Polymerisationsgrad von n = 10 bis 5000 und

3. 0 - 80 Gew.-% aliphatischen oder gemischt aliphatisch-aromatischen Polykondensations- oder Polyadditionsprodukten, Polyethern, Vinylpolymeren mit einer Glastemperatur $T_G$ bis zu 40°C oder ihren Gemischen,

wobei die Summe der Komponenten 1 - 3 und ebenfalls die Summe der Komponenten I - III stets 100 Gew.-% beträgt.

2) Dispersionen gemäß Anspruch I, enthaltend

I. 10- 90 Gew.-% endständig OH-funktionelle Organopolysiloxane,

II. 0 - 40 Gew.-% Organopolysiloxane mit Trimethylsilylendgmuppen,

III. 5 - 85 Gew.-% Pfropfpolymerisate, bestehend aus

1. 25 - 95 Gew.-% aliphatischen odem gemischt alipehtisch-aromatischen Polykondensationsoder Polyadditionsprodukten, Polyethern, Vinylpolymeren mit einer Glastemperatur $T_G$ bis zu 40 °C oder ihren Gemischen und

2. 5 - 75 Gew.-% polymerisierten Einheiten aus Vinylpolymeren, wobei die Summe der Komponenten 1 - 2 stets 100 Gew.-% beträgt,

IV. 5 - 85 Gew.-% durch Pfropfung mit Vinylmonomeren modifizierte Organopolysiloxane, bestehend aus

1. 10 - 90 Gew.-% Organopolysiloxenen mit Trimethylsilylendgruppen,

2. 10 - 90 Gew.-% polymerisierten Einheiten aus Vinylverbindungen,

3. 0 - 80 Gew.-% aliphatischen oder gemischt aliphatisch-aromatischen Polykondensations- oder Polyadditionsprodukten, Polyethern, Vinylpolymeren mit einer Glastemperatur $T_G$ bis zu 40 °C oder ihren Gemischen, wobei die Summe der Komponenten 1 bis 3 und die Summe der Komponenten 1 bis IV stets 100 Gew.-% beträgt.

3) Verfahren zur Herstellung von Dispersionen gemäß einem der Ansprüche 1 oder 2, dadurch gekennzeichnet, daß man

a) durch Pfropfung mit Vinylmonomeren modifizierte Organopolysiloxane bestehend aus

1. Organopolysiloxanen mit Trimethylsilylendgruppen
2. polymerisierten Einheiten aus Vinylverbindungen
3. aliphatischen oder gemischt aliphatischaromatischen polykondensations- oder Polyadditionsprodukten, polyethern, Vinylpolymeren mit einer Glastemperatur $T_G$ bis zu 40°C oder ihren Gemischen,
b) Organopolysiloxanen mit OH- oder Trimethylsilyl-Endgruppen und
c) aliphatische oder gemischt aliphatische-aromatische Polykondensations- oder Polyadditionsprodukte, Polyether oder Vinylpolymere mit einer Glastemperatur $T_G$ bis zu 40°C und/oder ihre durch Pfropfung mit Vinylmonomeren modifizierte Derivate und gegebenenfalls Gemische, solange unter mechanischer Bewegung vermischt bis eine weitgehend homogene und sich nicht wieder entmischende Masse gebildet hat.

4) Verfahren nach Anspruch 3, dadurch gekennzeichnet, daß man während der Herstellung der Mischung Monound/oder Polyisocyanate hinzufügt und die Urethanisierungsreaktion gegebenenfalls bei erhöhter Temperatur abschließt.

5) Bei Raumtemperatur vernetzbare Organopolysiloxanmassen, die Copfropfpolymerisatdispersionen nach einen der Ansprüche 1 und 2 und zusätzlich Vernetzer, Härtungskatalysatoren, Füllstoffe und gegebenenfalls weitere Zugschlagstoffe enthalten.

6) Verwendung von bei Rsumtemperetur vernetzbaren Orgenopolysiloxenmassen gemäß Anspruch 5 als Ein- oder Zweikomponentensysteme für Dichtungsmassen.

**Revendications**

1.) Dispersions fluides à la température ambiante, contenant

I. 10 à 90 % en poids de polydiorganosiloxannes et/ou de polydiorganosiloxannes à groupes terminaux OH de bloquage ayant un degré de polymérisation n = 10 à 5000,

II. 5 à 85 % en poids de produits aliphatiques ou aliphatiques-aromatiques mixtes de polycondensation ou de polyaddition, de polyéthers ou de polymères vinyliques ayant une température de transition vitreuse TV allant jusqu'à 40°C et/ou leurs dérivés modifiés par greffage avec des monomères vinyliques, et éventuellement leurs mélanges,

III. 5 à 85 % en poids d'un polymère greffé que l'on peut obtenir par polymérisation de greffage de:
1. 10 à 90 % en poids de composés vinyliques en présence de
2. 10 à 90 % en poids de polydiorganosiloxannes et/ou de polyorganosiloxannes à groupes fonctionnels OH terminaux, ayant un degré de polymérisation de n = 10 à 5000, et
3. 0 à 80 % en poids de produits aliphatiques ou aliphatiques-aromatiques mixtes de polycondensation ou de polyaddition, de polyéthers, de polymères vinyliques ayant une température de transition vitreuse $T_V$ allant jusqu'à 40°C ou leurs mélanges, la somme des composants 1 à 3 et éventuellement la somme des composants 1 à 3 valant toujours 100 % en poids.

2.) Dispersions selon la revendication 1, contenant,

I. 10 à 90 % en poids de polyorganosiloxannes comportant des groupes OH fonctionnels terminaux,

II. 0 à 40 % en poids de polyorganosiloxannes comportant des groupes triméthylsilyle terminaux,

III. 5 à 85 % en poids de polyméres de greffage, consistant en
1. 25 à 95 % en poids de produits aliphatiques ou aliphatiques-aromatiques mixtes de polycondensation ou de polyaddition, de polyéthers, de polyméres vinyliques ayant une température de transition vitreuse $T_V$ allant jusqu'à 40°C ou leurs mélanges, et
2. 5 à 75 % en poids de motifs polymérisés de polymères vinyliques, la somme des composants 1 - 2 formant toujours 100 % en poids,

IV. 5 à 85 % en poids de polyorganosiloxannes modifiés par greffage de monomères vinyliques, consistant en:
1. 10 à 90 % en poids de polyorganosiloxannes comportant des groupes triméthylsilyles terminaux,
2. 10 à 90 % en poids de motifs polymérisés de composés vinyliques,
3. 0 à 80 % en poids de produits aliphatiques ou aliphatiques-aromatiques mixtes de polycondensation ou de polyaddition, de polyéthers, de polymères vinyliques ayant une température de transition vitreuse $T_V$ allant jusqu'à 40°C ou leurs mélanges, la somme des composants 1 à 3 et la somme des composants I à IV formant toujours 100 % en poids.

3.) Procédé pour préparer des dispersions selon l'une des revendications 1 ou 2, caractérisé en ce que l'on mélange sous agitation mécanique:
a) des polyorganosiloxannes modifiés par greffage de monomères vinyliques, consistant en:
1. des polyorganosiloxannes comportant des groupes triméthylsilyles terminaux,
2. des motifs polymérisés provenant de composés vinyliques.
3. des produits aliphatiques ou aliphatiques-aromatiques mixtes de polycondensation ou de polyaddition, des polyéthers, des polymères vinyliques ayant une température de transition vitreuse $T_V$ allant jusqu'à 40°C ou leurs mélanges,
b) des polyorganosiloxannes comportant des groupes OH ou triméthylsilyles terminaux, et
c) des produits aliphatiques ou aliphatiques-aromatiques mixtes de polycondensation ou de polyaddition, des polyéthers ou des polymères vinyliques ayant une température de transition vitreuse $T_V$ allant jusqu'à 40°C

et/ou leurs dérivés modifiés par greffage de monomères vinyliques et éventuellement des mélanges, jusqu'à formation d'une composition largement homogène et qui ne sépare pas à nouveau.

4.) Procédé selon la revendication 3, caractérisé en ce que, pendant la préparation du mélange, on introduit des mono- et/ou des polyisocyanates et l'on termine, éventuellement à température élevée, la réaction d'uréthannisation.

5.) Compositions de polyorganosiloxannes réticulables à la température ambiante, qui contiennent les dispersions de copolyméres greffés selon l'une des revendications 1 et 2 et, en outre, un agent de réticulation, des catalyseurs de durcissement, des charges et éventuellement d'autres additifs.

6.) Utilisation des compositions de polyorganosiloxannes réticulables à la température ambiante selon la revendication 5 comme systèmes à un ou à deux composants pour des compositions d'étanchement.

## Claims

1. Dispersions which are flowable at room temperature and contain

I. 10 - 90% by weight of diorganopolysiloxanes and/or OH-terminated diorganopolysiloxanes having a degree of polymerisation n = 10 to 5,000,

II. 5 - 85% by weight of aliphatic or mixed aliphatic/ aromatic polycondensation or polyaddition products, polyethers or vinyl polymers having a glass temperature $T_G$ of up to 40°C and/or derivatives thereof modified by grafting with vinyl monomers, and optionally mixtures thereof,

III. 5 - 85% by weight of a graft polymer obtainable by graft polymerisation of

1. 10 - 90% by weight of vinyl compounds in the presence of

2. 10 - 90% by weight of diorganopolysiloxanes and/or organopolysiloxanes with terminal OH functional groups, having a degree of polymerisation of n = 10 to 5,000 and

3. 0 - 80% by weight of aliphatic or mixed aliphatic/ aromatic polycondensation or polyaddition products, polyethers, vinyl polymers with a glass temperature $T_G$ of up to 40° C, or mixtures thereof,

the sum of components 1 - 3 and also the sum of components I - III always being 100% by weight.

2.) Dispersions according to Claim 1, containing

I. 10 - 90% by weight of organopolysiloxanes with terminal OH functional groups,

II. 0 - 40% by weight of organopolysiloxanes with trimethylsilyl terminal groups,

III. 5 - 85% by weight of graft polymers consisting of

1. 25 - 95% by weight of aliphatic or mixed aliphatic/ aromatic polycondensation or polyaddition products, polyethers, vinyl polymers having a glass temperature $T_G$ of up to 40° C or mixtures thereof and

2. 5 - 75% by weight of polymerised units of vinyl polymers, the sum of components 1 - 2 always being 100% by weight,

IV. 5 - 85% by weight of organopolysiloxanes modified by grafting with vinyl monomers and consisting of

1. 10 - 90% by weight of organopolysiloxanes with trimethylsilyl terminal groups,

2. 10 - 90% by weight of polymerised units of vinyl compounds,

3. 0 - 80% by weight of aliphatic or mixed aliphatic/ aromatic polycondensation or polyaddition products, polyethers, vinyl polymers with a glass temperature $T_G$ of up to 40° C or mixtures thereof, the sum of components 1 to 3 and the sum of components I to IV always being 100% by weight.

3.) Process for the preparation of dispersions according to one of Claims 1 or 2, characterised in that

a) organopolysiloxanes modified by grafting with vinyl monomers and consisting of

1. organopolysilxanes with trimethylsilyl terminal groups,

2. polymerised units of vinyl compounds,

3. aliphatic or mixed aliphatic/aromatic polycondensation or polyaddition products, polyethers, vinyl polymers with a glass temperature $T_0$ of up to 40° C or mixtures thereof,

b) organopolysiloxanes with OH or trimethylsilyl terminal groups and

c) aliphatic or mixed aliphatic/aromatic polycondensation or polyaddition products, polyethers or vinyl polymers with a glass temperature $T_0$ of up to 40°C and/or derivatives thereof modified by grafting with vinyl monomers and optionally mixtures thereof, are mixed with mechanical agitation until a substantially homogeneous and nonreseparating composition has formed.

4.) Process according to Claim 3, characterised in that during the preparation of the mixture mono- and/or polyisoyanates re added and the urethanisation raction is completed, if appropriate at an elevated temperature.

5.) Organopolysiloxane compositions which are crosslinkable at room temperature and contain graft copolymer dispersions according to one of Claims 1 and i and in addition cross-linking agents, curing catalysts, fillers and optionally further additives.

6.). Use of organopolysiloxane compositions according to Claim 5, which are cross-linkable at room temperature, as one- or two-component systems for sealing compositions.

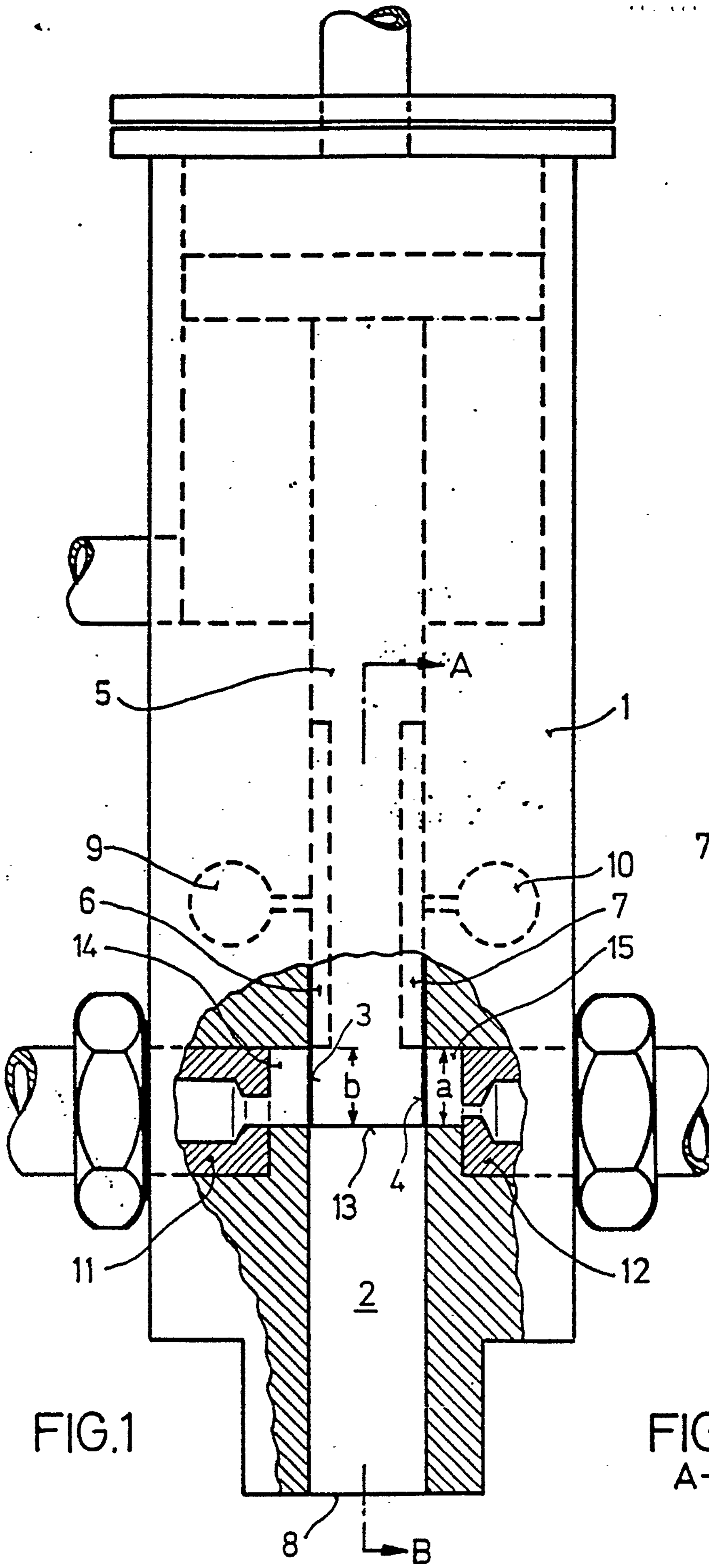


FIG.1

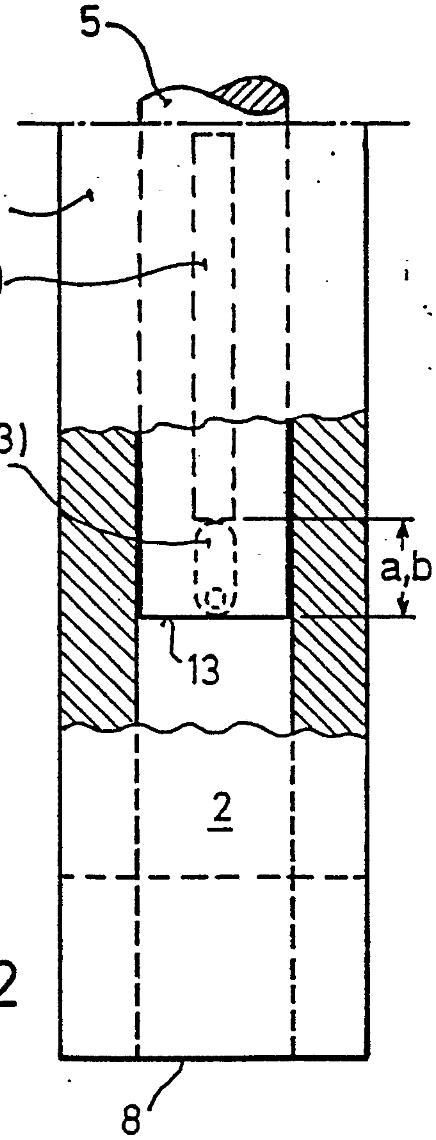


FIG.2
A-B